(19) Europäisches Patentamt
European Patent Office
Office européen des brevets

(11) **EP 4 535 036 A1**

(12) **EUROPÄISCHE PATENTANMELDUNG**

(43) Veröffentlichungstag:
09.04.2025 Patentblatt 2025/15

(21) Anmeldenummer: 24204613.4

(22) Anmeldetag: 04.10.2024

(51) Internationale Patentklassifikation (IPC):
*G01S 13/82* (2006.01)   *G01S 13/84* (2006.01)
*H04W 12/122* (2021.01)   G07C 9/00 (2020.01)

(52) Gemeinsame Patentklassifikation (CPC):
**G01S 13/84; G01S 13/825; G07C 9/00174;
H04W 12/122;** G07C 2009/00555;
G07C 2009/00793

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: 05.10.2023 PCT/EP2023/077614

(71) Anmelder: **Lambda: 4 Entwicklungen GmbH
22299 Hamburg (DE)**

(72) Erfinder: **Reimann, Rönne
22769 Hamburg (DE)**

(74) Vertreter: **Raffay & Fleck
Patentanwälte
Stephansplatz 2-6
20354 Hamburg (DE)**

(54) **VERFAHREN ZUR ERKENNUNG EINES RELAYANGRIFFS DURCH VERGLEICH VON TBR UND PBR BEI UNTERSCHIEDLICHEN MESSPUNKTMENGEN**

(57) Die Erfindung betrifft ein Verfahren zur Erkennung und/oder Verhinderung von Relayangriffen.

Gelöst wird die Aufgabe durch ein Verfahren zur Erkennung eines Relayangriffs, wobei zwischen einem ersten und einem zweiten Objekt Funksignale mit unterschiedlichen Frequenzen übertragen werden und an diesen Funksignalen Phasenmessungen und Laufzeitmessungen vorgenommen werden und die Veränderung der Phasenmessungen bei Veränderung der Frequenz mit den Signallaufmessungen oder deren Veränderung verglichen wird und wobei bei einer Überschreitung einer vorbestimmten oder aus Messungen an den Funksignalen bestimmten Abweichung ein Relayangriff angenommen wird wobei basierend auf den Phasenmessungen eine Messreihe und/oder basierend auf den Signallaufzeitmessungen eine Referenzmessreihe gebildet wird und die gefilterte und/oder geglättete Messreihe, mit der mindestens einen Signallaufzeitmessung oder deren Veränderung und/oder der Referenzmessreihe als Referenz verglichen wird und/oder wobei die Messreihe oder deren Veränderung mit der gefilterten und/oder gemittelte Referenzmessreihe verglichen wird.

EP 4 535 036 A1

**Beschreibung**

Die Erfindung betrifft ein Verfahren zur Erkennung und/oder Verhinderung von Relayangriffen.

Es sind zahlreiche Verfahren zur Erkennung von Relayangriffen oder Verhinderung, insbesondere Man-in-the-middle oder auch Wrap-around-attack oder phasemanipulation-attack oder Early-detect-late-commit Angriffen, bekannt.

Zudem ist es aus der EP 3 564 703 A1 bekannt, die Phasenlage eines empfangenen Signals zu bestimmen und mit einer auf andere Weise bestimmten Phasenlage zu vergleichen und bei Überschreiten einer vorbestimmten Abweichungen einen Relayangriff anzunehmen. Sie offenbart somit den Vergleich einer zeitlichen Lage oder Phasenlage mit einer vorbestimmten oder mit anderen Methoden berechneten zeitlichen Lage und/oder Phasenlage und nicht den Vergleich mit einer Laufzeit. Zudem ist die zeitliche Lage nicht eine Laufzeit sondern ein Äquivalent zur Phasenlage.

Auch ist es aus der WO 2022/096 514 A1 bekannt, dass die aus Entfernungsmessung gewonnen Entfernungen bei der Verwendung handelsüblicher Transceiver wie z.B. der schon etwas ältere cc2500 oder der aktuelle cc26xx von Texas Instruments oder der Kw35/36/37/38 von NXP oder der Dialog DA1469x von Dialog abhängig sind von der zur Entfernungsbestimmung verwendeten Frequenz. Zudem ist aus der Schrift ein Verfahren zur Erkennung eines Relayangriffs bekannt, wobei zwischen einem ersten und einem zweiten Objekt Funksignale mit unterschiedlichen Frequenzen übertragen werden und an diesen Funksignalen Phasenmessungen und Laufzeitmessungen vorgenommen werden und die Veränderung der Phasenmessungen bei Veränderung der Frequenz mit den Signallaufmessungen oder deren Veränderung verglichen wird und wobei bei einer Überschreitung einer vorbestimmten oder aus Messungen an den Funksignalen bestimmten Abweichung ein Relayangriff angenommen wird.

So ist es auch bekannt, dass sich die durch Phasenmessungen und Laufzeitmessungen gewonnenen Messwerte über die Veränderung der zur Messung verwendeten Frequenz gleichlaufend und beinahe proportional verändern. Daraus wurde erkannt, dass eine Abweichung der Veränderungen einen nicht natürlichen Ursprung hat und einen Relayangriff erkennen lässt. Dazu, so wurde erkannt, ist es nicht notwendig, die Entfernungen zu berechnen, sondern können Messwerte mit nur wenig oder keiner Verarbeitung verglichen werden und so einfach und zuverlässig ein Relayangriff erkannt werden, was bevorzugt wird.

Das zuletzt genannt Verfahren funktioniert gut, wenn ausreichend Messwerte vorhanden sind. Gerade bei wenigen Phasen- oder wenigen Laufzeitmessungen kann das Verfahren aber die im Verhältnis zu der anderen Art (Phasenmessung bzw. Laufzeitmessung) vielen Messungen nicht optimal nutzen. Hier setzt die Erfindung an.

Beispielsweise stellt die übliche Implementierung von Bluetooth nur sehr viel weniger Laufzeitmessungen als Phasenmessungen zur Verfügung, insbesondere da Signallaufzeitmessungen meist nur mit einem Antennenpaar und nur bei weniger Frequenzen bereitgestellt werden. So liegen beispielsweise bei nur 19 Laufzeitmessungen meist über 250 Phasenmessungen vor. Dabei sind die Messungen notwendigerweise mit gewissen Messfehlern behaftet. Ein Vergleich einer Signallaufzeitmessung mit einer Phasenverschiebungsveränderung zwischen zwei Frequenzen gemäß dem Stand der Technik kann die Vielzahl der Phasenmessungen nicht gewinnbringend nutzen.

Aufgabe der Erfindung ist es, ein verbessertes Verfahren anzugeben, dass verfügbare Messwerte möglichst optimal nutzt, um genauer und/oder zuverlässiger zu sein. Im oben genannten Beispiel kann durch das erfindungsgemäße Verfahren die Genauigkeit um mehr als den Faktor fünf gesteigert werden, indem beispielsweise die Phasenmessungen mit einer ersten Frequenzreihenfolge vorwärts und anschließend ein zweites Mal rückwärts, also mit umgedrehter Frequenzreihenfolge durch einen IIR Filter verarbeitet werden und aus dem dadurch gewonnen (und insbesondere stetig zwischen den Messpunkten fortgesetzten) Phasenverlauf bei den Frequenzen der Signallaufzeitmessungen entnommenen Gradienten (des Phasenverlaufs mit der Änderung der Frequenz) mit den Signallaufzeiten verglichen werden, anstelle jeweils zu zwei zu der Frequenz der jeweiligen Signallaufzeitmessung benachbarten/identischen Frequenzen vorliegende Phasenmessungen auszuwählen und deren Veränderung mit der Signallaufzeit zu vergleichen. Ähnliches ist auch mittels FIR-Filter erreichbar.

Als Nachteilig hat sich hingegen herausgestellt, sowohl Signallaufzeitmessungen als auch Phasenmessungen über die Frequenzen beispielsweise zu filtern und/oder zu glätten und beide Ergebnisse miteinander zu vergleichen. Dabei schadet es hingegen nicht zwingend, mehrere Messungen bei nahezu identischen Frequenzen jeweils zu mitteln. Eine Glättung/Filterung über die Frequenzen hinweg bei beiden Messarten hingegen führt dazu, dass Relayangriffe im Verhältnis zur Lösung der Erfindung nicht mehr genauso zuverlässig erkannt werden können. Somit ist es der grundlegende Gedanke der Erfindung eine der Messarten (Phasen oder Laufzeiten), bei der mehr Messwerte vorhanden sind zu glätten/filtern und mit den Messwerten der anderen Messart zu vergleichen, was auch durch eine Transformation erreicht werden kann.

Gelöst wird die Aufgabe durch ein Verfahren zur Erkennung eines Relayangriffs, wobei zwischen einem ersten und einem zweiten Objekt (01, O2) Funksignale mit unterschiedlichen Frequenzen (f1, f2, f3) übertragen werden und an einer ersten Teilmenge der Funksignale mit unterschiedlichen Frequenzen Phasenmessungen vorgenommen werden und wobei diese mit einer Referenz verglichen werden und wobei bei einer Überschreitung einer vorbestimmten oder aus Messungen an den Funksignalen bestimmten Abweichung ein Relayangriff angenommen wird, ein Zugang oder eine Freigabe verweigert wird, eine angefragte Handlung oder Aktion nicht vorgenommen und/oder eine Alarmierung oder Sperrung vorgenommen wird und/oder wobei bei Unterschreitung der vorbestimmten oder aus Messungen, insbesondere Signallaufmessungen, bestimmten Abweichung das Nichtvorhandensein eines Relayangriff angenommen wird, der Zugang oder die Freigabe gewährt und/oder die angefragte Handlung oder Aktion ausgeführt wird und/oder die Alarmierung oder Sperrung nicht vorgenommen wird, wobei an einer zweiten, mit der ersten Teilmenge insbesondere zumindest teilweise identischen, Teilmenge der Funksignale mit unterschiedlichen Frequenzen je eine Signallaufzeitmessung vorgenommen wird, dadurch gekennzeichnet, dass basierend auf den Phasenmessungen eine Messreihe und/oder basierend auf den Signallaufzeitmessungen eine Referenzmessreihe, jeweils in Abhängigkeit von der Frequenz der zur Messung verwendeten Frequenzen der Funksignale, gebildet wird/werden, wobei die Messreihe und/oder Signallaufzeitmessreihe entweder eine, insbesondere streng, monoton steigende oder, insbesondere streng, monoton fallende Abfolge von Frequenzen beinhalten und dass basierend auf dieser Messreihe eine gefilterte und/oder geglättete Messreihe und/oder basierend auf der Referenzmessreihe eine gefilterte und/oder geglättete Referenzmessreihe ermittelt wird und dass die gefilterte und/oder geglättete Messreihe, insbesondere deren Veränderung über die Frequenz, mit der mindestens einen Signallaufzeitmessung oder deren Veränderung und/oder der Referenzmessreihe als Referenz verglichen wird und/oder wobei die Messreihe oder deren Veränderung mit der gefilterten und/oder gemittelte Referenzmessreihe verglichen wird.

Teilmengen weisen untereinander insbesondere zumindest teilweise ähnliche Frequenzen auf, beispielsweise im verwendeten Funkprotokoll identische und/oder benachbarte Frequenzen. Insbesondere ist eine Frequenz zu einer anderen ähnlich, wenn der Frequenzabstand bei Frequenzen über 1 GHz maximal 5 MHz, insbesondere maximal 3 MHz beträgt. Dabei sind zu einer, insbesondere der kleineren, von erster und zweiter Teilmenge, insbesondere zu mindestens 50%, insbesondere zu mindestens 90%, bevorzugt 100%, der in der einen Teilmenge enthaltenen, in der anderen von erster und zweiter Teilmenge enthaltenen Frequenzen der Funksignale ähnliche und/oder identische enthalten, wobei insbesondere jede Frequenz der anderen immer nur für maximal eine Frequenz der einen als ähnlich betrachtet wird, insbesondere wenn zu Frequenzen der einen bestimmt wird, ob ähnliche oder identische in der anderen vorliegen.

Bevorzugt weisen dabei oder alternativ die Frequenzbandbreite der Funksignale der ersten Teilmenge mit der Frequenzbandbreite der Funksignale der zweiten Teilmenge eine Überlappung auf. Dabei ist die Überlappung im Frequenzbereich insbesondere der Art, dass die Schnittmenge der beiden Frequenzbandbreiten die Frequenzen von mindestens 50% der Signale der ersten Teilmenge und/oder die Frequenzen von mindestens 50% der Signale der zweiten Teilmenge beinhaltet und/oder mindestens 50% der Vereinigung der beiden Frequenzbandbreiten abdeckt.

Mit Vorteil beträgt die Anzahl der Signale der ersten mindestens drei, bevorzugt mindestens zehn, und/oder beträgt die Anzahl der Signale der zweiten Teilmenge mindestens drei, bevorzugt mindestens zehn.

Mit besonderem Vorteil unterscheidet sich die Anzahl der Messungen und/oder der Frequenzen der Messungen der Teilmengen, insbesondere um mindestens den Faktor zwei, bevorzugt um den Faktor vier. In solchen Fällen kann das Verfahren seine Vorzüge besonders deutlich zur Geltung bringen und für besondere Qualitätsverbesserungen sorgen.

Mit besonderem Vorteil wird das Verfahren so geführt, dass zu jeder Messung einer der ersten oder zweiten Teilmenge eine in Bezug auf die Frequenz ähnliche oder identische Messung, insbesondere eine ähnliche (insbesondere nicht mehr als 5 MHz Abweichung) mit höherer und eine ähnliche mit niedriger Frequenz, in der anderen der Teilmenge befindet, die in einem engen zeitlichen Zusammenhang und/oder bei weitgehend unverändertem Funkkanal erfolgt ist. ein weitgehend unveränderter Funkkanal kann insbesondere durch einen engen zeitlichen Zusammenhang gesichert werden, wobei dies von der Bewegung der Objekte und den Änderungen der realen Umgebung und den Änderungen von Funkstörungen, insbesondere im Verhältnis zur Wellenlänge, abhängt. Die Auswirkungen sollten zwischen den Messzeitpunkten eine Phasenänderung von weniger als 90° bedingen. In der Regel ist ein ausreichend enger zeitlicher Zusammenhang gegeben, wenn der zeitliche Abstand, insbesondere bei Frequenzen im GHz-Bereich, weniger als 10 ms beträgt. Bei z. B. 2.4GHz ist die Wellenlänge ca. 12cm, bei einer maximal angenommenen Bewegung von 4m/s (zügiges Joggen) = 3cm pro 7.5ms könnte der zeitliche Abstand weniger als 7.5ms gewählt werden.

Bei einer Veränderung einer Messreihe über die Frequenz ist insbesondere deren Änderung über eine Frequenzspanne bzw. gegenüber der Frequenz zu betrachten, also beispielsweise die Steigung in einer Darstellung gegenüber der Frequenz.

Dabei muss der Vergleich nicht nach Umrechnung in Entfernungen vorgenommen werden, sondern kann auch die Abweichung in anderen Einheiten vorbestimmt sein, die einen Vergleich ermöglichen.

Eine Umrechnung ist insbesondere mittels des Zusammenhangs Phasenverschiebung = 2 Pi * (Entfernung) * Frequenz / c, wobei zu beachten ist, dass ab einer gewissen Entfernung eine Mehrdeutigkeit zu berücksichtigen ist und c gleich der Lichtgeschwindigkeit ist

$$RTT = 2 * Entfernung / c$$

und daraus folgend unter Vernachlässigung der Mehrdeutigkeit:

$$\text{Phasenverschiebung} = \text{Pi} * (\text{RTT} * c) * \text{Frequenz} / c$$

Und/oder

$$\text{dPhasenverschiebung(f1,f2)} = \text{Pi} * (\text{RTT} * c) * \text{dFrequenz(f1,f2)} / c$$

somit ergibt sich (wieder unter Darstellung der Mehrdeutigkeit)

$$\text{dPhasenverschiebung(f1,f2)}_{RT} / \text{dFrequenz(f1,f2)} = \text{Pi} * \text{RTT}$$

dabei ist zu berücksichtigen, dass bei Entfernungen größer c/dFrequenz Mehrdeutigkeit entsteht. In den meisten Anwendungen lassen sich aber die Frequenzabstände so wählen, dass zumindest bei Entfernungen unter 150 Meter keine Mehrdeutigkeiten entstehen. Insbesondere wird/werden die mögliche Entfernung und/oder der Frequenzunterschied dFrequenz so gewählt, dass keine Mehrdeutigkeit entsteht bzw. diese vernachlässigt werden kann. Insbesondere ist die Entfernung kleiner der Lichtgeschwindigkeit geteilt durch den Frequenzunterschied der Messung der Phasenverschiebung, insbesondere mindestens um die Hälfte kleiner, insbesondere kleiner 300m, insbesondere kleiner 150m.

Dabei ist Phasenverschiebung(f1,f2)$_{RT}$ eine Phasenverschiebung zwischen den Übertragungen bei den Frequenzen f1 und f2 von einem Objekt zum anderen und zurück, die aufgrund der Entfernung auftritt. Sie kann näherungsweise gleichgesetzt werden mit dem Doppelten der Phasenverschiebung, die bei der Übertragung von einem Objekt zum anderen aufgrund der Entfernung auftritt. Dabei ist weiter dPhasenverschiebung(f1,f2) die ggf. korrigierte entfernungsbedingte Phasenverschiebungsdifferenz der bei der Frequenz f1 und der Frequenz f2 empfangenen Funksignale und dFrequenz deren Differenz und c die Lichtgeschwindigkeit. RTT ist die Signalrundlaufzeit von einem Objekt zum anderen und zurück. Anstelle der Akzeptanz des Mehrdeutigkeitsproblems kann man auch durch andere Methoden die Mehrdeutigkeit auflösen und durch Addition des ermittelten Korrekturterms zur Auflösung der Mehrdeutigkeit formulieren.

Umrechnungen sind aber beispielsweise auch auf eine freie oder dimensionslose Größe und/oder mittels Transformation, beispielsweise FFT, vorstellbar. Sofern mittels FFT eine Größe mit neuer Dimension zum Vergleich berechnet wird, wird bevorzugt die größere Teilmenge so reduziert, dass sie die gleiche oder eine ähnliche, insbesondere um maximal 10% abweichende, Größe wie die kleinere Teilmenge aufweist, insbesondere dadurch dass die Reduktion so erfolgt, dass zu mindestens 90% der, insbesondere jeder, Frequenz der Messungen der kleineren Teilmenge eine möglichst ähnliche erhalten bleibt, wobei insbesondere nur 1:1 Zuordnungen vorgenommen werden.

So kann eine gefilterte und/oder gemittelte Messreiche und/oder Referenzmessriehe mittels einer Transformation, insbesondere FFT, erzeugt werden. Beispielsweise können die Phasenmessungen einer FFT unterzogen und mit den Laufzeitmessungen verglichen werden. Dabei kann die FFT so gewählt werden, dass letztendlich Entfernungen verglichen werden, aber auch anders dimensioniert Vergleichsgrößen wie Entfernung dividiert durch die Lichtgeschwindigkeit.

Insbesondere, wenn zu zwei Phasenmessungen mit benachbarten Frequenzen f1, f2 und engem zeitlichen Zusammenhang keine ausreichend ungestörte Signallaufzeitmessung bei einer oder mehreren Frequenz(en) im Bereich von 90% f1 bis 110% f2 vorliegt, wobei f1 kleiner als oder gleich zu f2 ist, können bekannte Verfahren keine guten Lösungen bereit stellen. Insbesondere liegen f1, f2 und f3 im Bereich von 1 GHz bis 10 GHz, insbesondere im Bereich von 2 MHz bis 6 GHz, insbesondere sind sie Frequenzen eines Bluetooth Kanals.

Aber auch wenn zu einer Laufzeitmessung bei der Frequenz fl keine ausreichend ungestörten Phasenmessungen mit benachbarten Frequenzen f1, f2 und engem zeitlichen Zusammenhang und fl im Bereich von 90% f1 bis 110% f2 vorliegt, wobei f1 kleiner als oder gleich zu f2 ist, können bekannte Verfahren keine guten Lösungen bereitstellen. Insbesondere liegen f1, f2 und fl im Bereich von 1 GHz bis 10 GHz, insbesondere im Bereich von 2 MHz bis 6 GHz, insbesondere sind sie Frequenzen eines Bluetooth Kanals.

Besonders bevorzugt werden Ausgestaltungen, bei denen Veränderung der Phasenmessungen bei Änderung der Frequenz bzw. bei denen Veränderung der Phasenverschiebung, die auf Basis der Entfernung entsteht, bei Änderung der Frequenz, insbesondere relativ zur Änderung der Frequenz mit der Signallaufzeitmessung verglichen werden. Oder anders ausgedrückt, besonders bevorzugt werden Veränderung der Phasenmessungen oder, insbesondere entfernungsbedingten, Phasenverschiebungen bei Änderung der Frequenz mit der Signallaufmessungen verglichen und dieser Vergleich für verschiedene Frequenzen durchgeführt und geprüft, ob diese Vergleiche zu Vergleichswerten führen, die innerhalb einer vorbestimmten oder aus Messungen an den Funksignalen bestimmten Spanne liegen oder eine vorbestimmte oder aus Messungen an den Funksignalen bestimmte Abweichung, insbesondere von einem vorbestimmten oder aus Messungen an den Funksignalen bestimmten Wert, überschreiten. Insbesondere wird bei Lage der Vergleichswerte außerhalb der Spanne oder des Intervalls oder bei Überschreiten der Abweichung ein Relayangriff als erkannt angenommen und/oder anderenfalls darauf geschlossen, dass kein Relayangriff vorliegt.

Der durch die Frequenzänderung bedingte oder die dadurch entstehende Änderung der Phasenverschiebung ist dadurch bedingt, dass bei, insbesondere näherungsweise gleicher Entfernung bei beiden Messungen, unterschiedlich viele Wellenzüge auf die Entfernung passen und dadurch die Phasenverschiebung, die durch die Entfernung bedingt ist, zwischen den Frequenzen unterschiedlich ausfällt. Diese Änderung der Phasenverschiebung auf Grund der Frequenz ist der durch die Frequenzänderung bedingte Phasenwechsel. Beim Messen ergeben sich dabei Probleme, denn die Phasenmessung ist jeweils abhängig von einer Referenz und kann auch beim Umschalten zum Senden der unterschiedlichen Frequenzen ein, häufig undefinierter, Phasensprung entstehen. Somit wird zum Senden, und insbesondere auch zum Empfangen, bevorzugt phasenkohärent, also mit einem Phasensprung von null, umgeschaltet. Es reicht aber auch aus, den Phasensprung zu ermitteln oder zu kennen. Dann kann man die durch die Frequenzänderung Phasenänderung bestimmen durch die gemessene Phasenänderung korrigiert um den Phasensprung bei der Umschaltung des Senders und den Phasensprung beim Umschalten am Empfänger zur Messung der gemessenen Phasenänderung.

Der Vergleich kann dabei wie folgt erfolgen, indem ein Vergleichskoeffizient k ermittelt wird und geprüft wird, ob dieser in einer vorgegebenen Spanne als vorbestimmte Abweichung liegt. Dabei wird dPhasenverschiebung(f1,f2)/ dFrequenz(f1,f2) als der oben beschriebene Gradient in allen nachfolgenden Schilderungen vorteilhafterweise nach Filterung, insbesondere IFFT Filterung, aus dem gefilterten, und insbesondere stetig vervollständigtem, Phasenverschiebungsverlauf gegenüber der Frequenz gewonnen.

$$\text{dPhasenverschiebung(f1,f2)} \,/\, \text{dFrequenz(f1,f2)} \,/\, \text{RTT} = k$$

Dies wird allerdings nicht bevorzugt, es wird vielmehr bevorzugt, ohne eine Verhältnisbildung zu arbeiten, sondern eine Differenz zu ermitteln und zu prüfen ob diese in einer vorbestimmten Spanne als vorbestimmte Abweichung liegt, also beispielsweise

Die Differenz zwischen der gemessenen Signallaufzeit (Pulssignallaufzeit, ToF) (in nur eine Richtung, also etwa 0,5 RTT) und dem Term

$$\text{dPhasenverschiebung(f1,f2)} \,/\, \text{dFrequenz(f1,f2)} \,/2\, /\text{Pi}$$

zu bilden und zu prüfen, ob das Ergebnis in einer vorgegebenen Spanne liegt. Selbstverständlich können auch Differenzen zu zwischen ähnlichen Ausdrücken gebildet werden, wie zwischen

$$\text{RTT} \times \text{Pi und dPhasenverschiebung(f1,f2)} \,/\, \text{dFrequenz(f1,f2)}$$

Eine Korrektur der Phasenmessung am Empfänger ist insbesondere dann vorteilhaft, wenn am Sender und/oder Empfänger keine phasenkohärente Frequenzumschaltung ohne Phasensprung durchgeführt wird. Denn es kommt nicht auf die beim Empfang gemessene Phase an sich, sondern auf die entfernungsbedingte Phasenänderung an. In Delta_Phasenänderung(f1- > f2) gehen also bevorzugt die beiden durch die Übertragung bedingten Phasenverschiebungen bei f1 und f2 ein.

Aber auch andere Vergleiche sind möglich, sofern sie die Änderung der Phasenverschiebung des Funksignals über die Frequenzänderung mit der Signallaufzeit vergleichen wird und dies an mehreren Frequenzen bzw. Frequenztripeln erfolgt. So können auch Entfernungen berechnet und vergleichen werden.

Auch ist es möglich, beispielsweise durch mehrere Messungen zeitversetzt auf einer gleichen Frequenz, Bewegungseffekte zu neutralisieren, insbesondere indem die Phasenmessungen gemittelt werden.

Bevorzugt wird das Verfahren so geführt, dass die Funksignale eine erste Mehrzahl Funksignale umfassen und eine zweite Mehrzahl Phasenmessungen und eine dritte Mehrzahl Signallaufzeitmessungen vorgenommen werden, wobei die zweite Mehrzahl Signallaufmessungen an einer vierten Mehrzahl Signalen mit einer fünften Mehrzahl Frequenzen durchgeführt wird und die dritte Mehrzahl Signallaufmessungen an einer sechsten Mehrzahl Signalen mit einer siebten Mehrzahl Frequenzen durchgeführt wird und die Spanne der fünften Mehrzahl Frequenzen und die die Spanne der siebten Mehrzahl Frequenzen eine Überlappung in dem Frequenzintervall aufweisen und in diesem Frequenzintervall die Veränderung der zweiten Mehrzahl der Signallaufmessungen mit der Veränderung der dritten Mehrzahl der Signallaufmessungen oder der Veränderung verglichen wird. Auch in einer solchen Ausgestaltung ist eine besonders zuverlässige Erkennung möglich. Die dritte Mehrzahl liegt insbesondere im Bereich von 3 bis 150 und die zweite Mehrzahl insbesondere im Bereich 10 bis 500, wobei sich ihre Anzahl insbesondere um einen Faktor von mindestens zwei, insbesondere 4 unterscheidet.

Insbesondere liegen die Frequenzen bei denen die Laufzeit- und/oder Phasenmessungen vorgenommen werden in einer Spanne von 25 bis 100 MHz, insbesondere überspannen Sie eine solche Spanne vollständig. Insbesondere liegen die Frequenzen im Bereich von 2 bis 6 GHz. Insbesondere liegt zwischen benachbarten für die Laufzeit- und/oder Phasenmessungen verwendeten Frequenzen ein Abstand im Bereich von 0,1 bis 10 MHz, insbesondere im Bereich von 0,5 bis 10 MHz.

Es können auch mehrere Vergleiche durchgeführt und eine aggregierte Vergleichszahl bestimmt werden, die mit einer vorbestimmten Abweichung verglichen wird. So kann beispielsweise, der Mittelwert der Abweichung gebildet werden und dieser mit einer vorbestimmten Abweichung verglichen werden. Auch ist es möglich, die Größe der Überschreitung einer vorbestimmten Abweichung und die Unterschreitung oder Größe Nicht-Ausschöpfung mit umgekehrten Vorzeichen zu summieren und mit einer vorbestimmten Summenabweichung zu vergleichen. Auch ungleiche Gewichtungen bei einer Aggregation sind vorstellbar.

Mit besonderem Vorteil wird eine Mehrzahl, insbesondere von mindestens drei, von Einzelvergleichen durchgeführt. Dabei wird für einen Einzelvergleich insbesondere ein Messwert der Referenzmessreiche mit der Messreihe oder der gefilterten und/oder gemittelten Messreihe vergleichen oder ein Messwert der Messreihe mit der Referenzmessreiche oder der gefilterten und/oder gemittelten Referenzmessreiche und/oder, insbesondere bevorzugt, deren Veränderung verglichen.

Mit besonderem Vorteil werden die Einzelvergleich so durchgeführt, dass ein Gradient aus der gemittelte, gefilterte, geglätteten und/oder transponierten Messreihe bestimmt wird und mit einem Messwert der Referenzmessreihe verglichen wird.

Die Ergebnisse der Einzelvergleiche können denn wiederrum aggregiert werden und mit der einer vorbestimmten oder aus Messungen an den Funksignalen bestimmten Abweichung verglichen werden. Insbesondere werden mindestens drei Einzelvergleiche aggregiert.

Mit besonderem Vorteil wird eine gefilterte Messreihe oder eine gefilterte Referenzmessriehe verwendet, die beispielsweise durch einen FIR-Filter oder eine FFT, insbesondere einem Herausnehmen höherer Frequenzanteile aus dem Ergebnis der FFT, beispielsweise die obersten 25% des Frequenzspektrums, und einer IFFT des Verbleibenden gewonnen wird. Dadurch lassen sich Störungen effektiv reduzieren.

Besonders bevorzugt wird jedoch die Filterung mittels Anwendung eines IIR-Filters, insbesondere vorwärts und rückwärts (in Bezug auf die Reihenfolge der Frequenzen der Messungen einer Mess- oder Referenzmessreihe). Dadurch lassen sich Fremdeinflüsse und Messfehler noch besser korrigieren. Durch das zweimalige Hindurchführen durch den Filter mit umgekehrter Reihenfolge lassen sich auch durch den Filter erzeugte Phasenartefakte weitgehend vermeiden, was von besonderem Vorteil ist. Ein weiterer Vorteil der Verwendung von IIR liegt in der geringeren notwendigen Rechenleistung und geringerer Latenz, was insbesondere in quasi-Echtzeit Anwendungen und/oder begrenzter Energie und/oder Rechenleistung besondere Vorteile mit sich bringt. Insbesondere wird das Verfahren so geführt, dass die Filterung in einem mobilen (End-)Gerät, insbesondere Automobil, Mobiltelefon oder Funkschlüssel durchgeführt wird, wo sich die Vorteile besonders deutlich zeigen.

Ein solches Vorgehen kann weiter dadurch verbessert werden, dass die zu filternde Mess- oder Referenzmessreihe am Beginn oder Ende (in Bezug auf die Frequenzen der Mess- bzw. Referenzmessreihe) verlängert wird, insbesondere durch Anreicherung durch Wiederholen des ersten Messwerts zusammen mit seiner Frequenz der Mess- oder Referenzmessreihe vor deren Beginn und/der des letzten Messwerts mit seiner Frequenz nach dem Ende der Mess- oder Referenzmessreihe.

Mit besonderem Vorteil werden die phasenbasierten Messungen und/oder Laufzeitmessungen zur Entfernungsmessung verwendet, dadurch lassen sich auch andere Angriffe erkennen, andere Funktionen umsetzten und die Funksignale effizient nutzen.

Bevorzugt wird es, die Anzahl der Phasenmessungen und/oder der Laufzeitmessungen im Frequenzintervall und/oder die Anzahl der Frequenzen, an denen Phasenmessungen und/oder Laufzeitmessungen im Frequenzintervall vorgenommen werden, mindestens mit fünf zu wählen.

Mit Vorteil wird das Verfahren mit mehreren ersten Objekten und einem gemeinsamen zweiten Objekt durchgeführt. Dabei kann insbesondere das gemeinsame zweite Objekt ein Authentifizierungsmittel, wie elektronischer Schlüssel, zum Beispiel Keyfob, darstellen. Dies erhöht die Zuverlässigkeit der Erkennung und erschwert die Täuschung des Systems.

Ein Funksignal wird von einem anderen insbesondere dadurch abgegrenzt, dass es eine andere Frequenz aufweist. Insbesondere weisen Funksignale untereinander Frequenzunterschiede auf, die größer sind als die Frequenzstabilität der beteiligten Hardware.

Mit weiterem Vorteil, insbesondere um die Vergleiche zu vereinfachen und noch robuster zu gestalten, wird der der Wechsel zwischen mindestens zwei, insbesondere allen, der fünften Mehrzahl Frequenzen und/oder zwischen mindestens zwei, insbesondere allen, der siebten Mehrzahl Frequenzen phasenkohärent durchgeführt. Bevorzugt werden alle Frequenzwechsel mindestens eines der Objekte phasenkohärent durchgeführt. Mit etwas geringerem Vorteil aber dennoch vorteilhaft werden die beim Frequenzwechsel auftretenden Phasenverschiebungen, insbesondere am Sender und/oder Empfänger, gemessen und zur Korrektur der Phasenmessungen verwendet.

Mit Vorteil wird das Verfahren so geführt, dass Laufzeitmessungen und/oder Phasenmessungen an Funksignalen und/oder Funksignale mit einer Leistung unterhalb einer vorbestimmten und/oder, insbesondere aus oder unter Berücksichtigung empfangener Funksignale, ermittelten Leistungsuntergrenze empfangene Funksignale unberücksichtigt bleiben oder nur mit einem geringeren Gewicht berücksichtigt werden, insbesondere solche Funksignale unberücksichtigt bleiben oder niedriger gewichtet werden, die mehr als 50% unter der mittleren Leistung der empfangenen Funksignale liegen und/oder wobei Laufzeitmessungen und/oder Phasenmessungen an Funksignalen und/oder Funksignale mit einer Leistung oberhalb einer vorbestimmten und/oder, insbesondere aus oder unter Berücksichtigung empfangener Funksignale, ermittelten Leistungsobergrenze empfangene Funksignale unberücksichtigt bleiben oder niedriger gewichtet werden, insbesondere solche Funksignale unberücksichtigt bleiben oder niedriger gewichtet werden, die mehr als 50% oberhalb der mittleren Leistung der empfangenen Funksignale liegen.

Anders gesprochen, wird es bevorzugt, wenn die Messungen mit geringer Empfangsleistung, insbesondere einer Empfangsleistung unterhalb eines vorbestimmten Wert oder Anteil der mittleren oder maximalen Empfangsleistung, nicht oder nur mit geringerer Gewichtung berücksichtigt werden und/oder die Messungen mit sehr hoher Empfangsleistung, insbesondere einer Empfangsleistung oberhalb eines vorbestimmten Werts oder Anteil der mittleren oder maximalen Empfangsleistung, nicht oder nur mit niedrigerer Gewichtung berücksichtigt werden. Durch derartige Ausgestaltungen lässt sich das Verfahren besonders robust ausgestalten

Bevorzugt beträgt die Breite des Frequenzintervalls mindestens 0,1 MHz und/oder maximal 100 MHz und/oder beträgt der Frequenzabstand zwischen zwei aufeinander folgenden der unterschiedlichen Frequenzen mindestens 0,1 MHz und/oder maximal 10 MHz und/oder wird es bevorzugt, wenn die unterschiedlichen Frequenzen mindestens fünf Frequenzen und/oder maximal 200 Frequenzen darstellen und/oder wobei die Funksignale auf den unterschiedlichen Frequenzen nacheinander und/oder aufeinanderfolgend, insbesondere unmittelbar aufeinanderfolgend, abgestrahlt werden und/oder wobei die Bandbreite der Funksignale zu keiner Zeit 50 MHz, insbesondere 25 MHz, übersteigt.

Insbesondere wird es bevorzugt, wenn die Reihenfolge der abgestrahlten und/oder für den Vergleich verwendeten Funksignal eine, insbesondere monoton, bevorzugt streng monoton, steigende oder fallende Frequenzabfolge aufweist. Dies hat sich insbesondere bei Verwendung von Filtern und/oder Transformationen, insbesondere FIR- und/oder IIR-Filtern, als besonders vorteilhaft gezeigt.

Gekennzeichnet ist eine Ausführung der Erfindung dadurch, dass zur Bestimmung des Relayangriffs nur die Signale, die das erste Objekt gesendet hat, oder (ausschließliches oder) die Signale, die das zweite Objekts gesendet hat, verwendet werden.

Dabei sind sowohl Ausführungen möglich, bei denen nur das erste Objekt sendet als auch solche, bei denen nur das zweite Objekt sendet, als auch solche, bei denen beide Senden aber nur ein Teil der Signale, nämlich die vom ersten Objekt oder (ausschließliches oder) die vom zweiten Objekt gesendeten, zur Abstandsbestimmung verwendet werden.

Das Verfahren beinhaltet bevorzugt die Entscheidung, ob die Signale des ersten oder zweiten Objekts verwendet werden, insbesondere auf Basis mindestens je einer Abschätzung oder Bestimmung von Auswirkungen von Störungen auf den Empfang an beiden Objekten. Diese Entscheidung kann vor oder nach dem Senden der Signale oder nach dem Senden eines Teils erfolgen.

Sofern die Geschwindigkeit gesteigert werden soll, ist es bevorzugt, die Entscheidung möglichst frühzeitig zu treffen und das Senden nicht verwendeter Signale möglichst gering zu halten, insbesondere nach der Entscheidung solche nicht mehr zu senden. Soll das Verfahren möglichst störungsunanfällig ausgestaltet sein, wird die Entscheidung erst nach Senden der Signale des ersten und der Signale des zweiten Objekts gefällt. Gesendete und empfangene Signale können zur Fällung der Entscheidung verwendet werden. Dazu können aber alternativ oder zusätzlich auch andere Daten oder Messungen verwendet werden, wie beispielsweise das Rauschen oder verfahrensfremde Signale am Empfänger.

Gewählt werden insbesondere die Funksignale des ersten oder (ausschließliches oder) des zweiten Objekts, deren Empfang am jeweils anderen der zwei Objekte weniger gestört war, ist oder voraussichtlich sein wird.

Mit besonderem Vorteil wechselt das erste und/oder zweite Objekt zwischen mindestens zwei der mehreren Frequenzen phasenkohärent oder wird ein beim Umschalten entstehender Phasensprung am umschaltenden Objekt gemessen und bei der Berechnung berücksichtigt. Dadurch lässt sich eine noch robustere und einfachere Verfahrensführung aber auch Entfernungsmessung umsetzen und lassen sich weitere Vorteile bei der Verwendung der Signale dadurch realisieren, dass darauf beruhende Auswertungen vereinfacht werden. Beispielsweise kann bei Kenntnis des Zeitpunktes des phasenkohärenten Wechsel oder des Wechsels mit gemessenem Phasensprung am sendenden Objekt und bei Bestimmung des Wechsels im empfangenen Signal am empfangenen Objekt die Zeit zwischen Senden und Empfang des Wechsels bestimmt werden, die die Signallaufzeit (ToF) darstellt, und auch die Phasenverschiebung bestimmt werden. Aus der Signallaufzeit lässt sich mittels der Lichtgeschwindigkeit direkt die Entfernung bestimmten. Über die Phasenverschiebung ist dies, jedoch modulo der Wellenlänge, ebenfalls möglich. Durch Nutzung mehrerer Frequenzen lässt sich die Mehrdeutigkeit bei der phasenbasierten Messung reduzieren. Durch die Kombination der signallaufzeit- und phasenbasierten Messungen lässt sich eine besonders genaue und robuste Entfernungsmessung realisieren.

Unter phasenkohärentem Umschalten oder Wechsel zwischen zwei Frequenzen wird insbesondere verstanden, dass der Zeitpunkt des Umschaltens genau bestimmt ist oder gemessen wird und die Phase nach der Umschaltung relativ zur Phasenlage vor der Umschaltung bekannt ist. Dies ist der Fall, wenn die Veränderung der Phase beim Umschalten null ist oder einen vorbekannten Wert beträgt. Hilfsweise kann auch der beim Umschalten entstehende Phasensprung, insbesondere lokal, also insbesondere vor dem Senden bzw. betreffend den Empfänger am Empfänger, gemessen und vor und/oder beim Vergleich herausgerechnet und/oder korrigiert werden.

Bekannt sein kann der Phasenunterschied oder -sprung beim Wechsel zwischen Frequenzen beispielsweise dadurch, dass er vorbestimmt ist oder aus anderen bekannten Größen, beispielsweise der Dauer einer, insbesondere unmittelbar, vorausgehenden Abstrahlung bei einer Frequenz, ableitbar ist.

Der Phasenunterschied entsteht beim Umschalten zwischen zwei Frequenzen in der Regel, aus technischen Gründen, kann aber auch vermieden werden. Dabei kann das Umschalten zwischen zwei Frequenzen mit kurzer Unterbrechung oder unterbrechungsfrei durchgeführt werden. Zum Zeitpunkt des unterbrechungsfreien Wechsels springt die Phase bzw. während des Wechselns mit Unterbrechung springt die Phase der gedacht in die Unterbrechung fortgedachten Signale vor und nach dem Umschalten. Zu dem Wechselzeitpunkt ohne Unterbrechung oder zu einem gedachten Wechselzeitpunkt in der Unterbrechung, insbesondere in der Mitte der Unterbrechung und/oder am Ende des Signals vor der Unterbrechung oder am Beginn des Signals nach der Unterbrechung, liegt ein definierter Phasensprung vor. Dieser ist der Phasenunterschied.

Mit besonderem Vorteil wird auch am empfangenen Objekt und/oder zum Empfang phasenkohärent umgeschaltet, insbesondere zwischen den unterschiedlichen Frequenzen. Insbesondere schalten also erstes und zweites Objekt zwischen Frequenzen phasenkohärent um. Dies erfolgt insbesondere durch phasenkohärentes Umschalten mindestens einer PLL am ersten und/oder zweiten Objekt. Insbesondere sind die Objekte entsprechend eingerichtet.

Mit Vorteil sendet das zweite oder (ausschließliches oder) erste Objekt keine Signale zur Entfernungsbestimmung und/oder sendet das zweite oder das erste Objekt (ausschließliches oder) Signale nur zur Zeit- und/oder Taktsynchronisation. Dadurch lässt sich Energie und Verfahrenszeit einsparen.

Bevorzugt sendet das erste und/oder zweite oder jedes der zwei Objekte die Signale auf mehreren Frequenzen nacheinander und/oder aufeinanderfolgend, insbesondere unmittelbar aufeinanderfolgend. Insbesondere werden beim Senden durch erstes und zweites Objekt zunächst alle Signale des ersten oder zweiten Objekts und anschließend die des anderen gesendet. Dadurch lassen sich unter anderem Einflüsse von Umgebungs- oder Entfernungsänderungen und von Bewegungen eines oder beider Objekte reduzieren.

Mit Vorteil übersteigt die Bandbreite der Signale zu keiner Zeit 50 MHz, insbesondere 25 MHz. Dadurch lässt sich Energie einsparen, Störungen anderer Prozesse vermeiden und gegenüber breitbandigen Verfahren einfache Bauteile nutzen.

Vorteilhafterweise werden die Signale über mehrere Antennenpfade übertragen, insbesondere mit mehreren Antennen, insbesondere nacheinander, am sendenden Objekt gesendet und/oder mit mehreren Antennen am empfangenen Objekt empfangen.

Mit besonderem Vorteil wird bei Erkennen eines Relayangriffs ein Zugang oder eine Freigabe verwehrt, eine angefragte Handlung oder Aktion nicht vorgenommen und/oder eine Alarmierung oder Sperrung vorgenommen und/oder bei nichtErkennen eines Relayangriffs der Zugang oder die Freigabe gewährt und/oder die angefragte Handlung oder Aktion ausgeführt und/oder die Alarmierung oder Sperrung nicht vorgenommen.

Gelöst wird die Aufgabe auch durch ein oder zwei Objekte, jeweils eingerichtet mit Sende- und Empfangsmitteln und einer Steuerung, eingerichtet zur Durchführung des erfindungsgemäßen Verfahrens.

Mit Vorteil sind die Objekte Teile eines Datenübertragungssystems, insbesondere eines Bluetooth, WLAN oder Mobilfunk Datenübertragungssystems. Bevorzugt sind die Funksignale Signale des Datenübertragungssystems, insbesondere eines Datenübertragungsstandards, beispielsweise Mobilfunkstandard, WLAN oder Bluetooth, die zur Datenübertragung gemäß des Datenübertragungsstandards genutzt werden.

Gelöst wird die Aufgabe auch durch die Verwendung der Veränderung von Phasenmessungen gegenüber von Signallaufmessungen oder deren Veränderung zwischen zwei Objekten, wobei die Phasenmessungen und Signal-laufzeitmessungen an Signalen mit überlappten Frequenzbandbreiten vorgenommen werden zur Erkennung eines Relayangriffs.

Gelöst wird die Aufgabe auch durch ein Zugangssystem zur Gewährung und/oder Verweigerung eines Zugangs, eingerichtet zur Durchführung des erfindungsgemäßen Verfahrens und zur Gewährung und/oder Verweigerung basierend auf der verfahrensgemäßen Erkennung.

**Patentansprüche**

1.  Verfahren zur Erkennung eines Relayangriffs, wobei zwischen einem ersten und einem zweiten Objekt (01, O2) Funksignale mit unterschiedlichen Frequenzen (f1, f2, f3) übertragen werden und an einer ersten Teilmenge der Funksignale mit unterschiedlichen Frequenzen Phasenmessungen vorgenommen werden und wobei diese mit einer Referenz verglichen werden und wobei bei einer Überschreitung einer vorbestimmten oder aus Messungen an den Funksignalen bestimmten Abweichung ein Relayangriff angenommen wird, ein Zugang oder eine Freigabe verwehrt wird, eine angefragte Handlung oder Aktion nicht vorgenommen und/oder eine Alarmierung oder Sperrung vorgenommen wird und/oder wobei bei Unterschreitung der vorbestimmten oder aus Messungen bestimmten Abweichung das Nichtvorhandensein eines Relayangriff angenommen wird, der Zugang oder die Freigabe gewährt und/oder die angefragte Handlung oder Aktion ausgeführt wird und/oder die Alarmierung oder Sperrung nicht vorgenommen wird,

wobei an einer zweiten Teilmenge der Funksignale mit unterschiedlichen Frequenzen je eine Signallaufzeitmessung vorgenommen wird,

wobei die Frequenzbandbreite der Funksignale der ersten Teilmenge mit der Frequenzbandbreite der Funksignale der zweiten Teilmenge eine Überlappung aufweist und wobei die Anzahl der Funksignale der ersten Teilmenge mindestens zehn beträgt,

wobei basierend auf den Phasenmessungen eine Messreihe und/oder basierend auf den Signallaufzeitmessungen eine Referenzmessreihe, jeweils in Abhängigkeit von der Frequenz der zur Messung verwendeten Frequenzen der Funksignale, gebildet wird/werden und wobei basierend auf dieser Messreihe eine gefilterte und/oder geglättete Messreihe und/oder basierend auf der Referenzmessreihe eine gefilterte und/oder geglättete Referenzmessreihe ermittelt wird und dass die gefilterte und/oder geglättete Messreihe mit der mindestens einen Signallaufzeitmessung oder deren Veränderung und/oder der Referenzmessreihe als Referenz verglichen wird und/oder wobei die Messreihe oder deren Veränderung mit der gefilterten und/oder gemittelte Referenzmessreihe verglichen wird,

**dadurch gekennzeichnet, dass** die Messreihe und/oder Referenzmessreihe entweder eine monoton steigende oder monoton fallende Abfolge von Frequenzen beinhalten und dass die gefilterte und/oder geglättete Messreihe und/oder die gefilterte und/oder geglättete Referenzmessreihe durch Filtern und/oder Glätten erzeugt wird.

2. Verfahren nach Anspruch 1, wobei die Anzahlen der Elemente der ersten und zweiten Teilmenge mindestens um den Faktor zwei differieren.

3. Verfahren nach einem der vorstehenden Ansprüche, wobei eine gefilterte und/oder gemittelte Messreihe und/oder Referenzmessreihe mittels eines Filters erzeugt und für den Vergleich verwendet wird.

4. Verfahren nach dem vorstehenden Anspruch 3, wobei die Filterung mittels eines IIR Filters erfolgt.

5. Verfahren nach einem der vorstehenden Ansprüche, wobei die Messreihe und/oder Referenzmessreihe transformiert wird und das Ergebnis der Transformation für den Vergleich verwendet wird.

6. Verfahren nach einem der vorstehenden Ansprüche, wobei eine Mehrzahl von Einzelvergleichen durchgeführt wird, bei denen jeweils eine einzelne Signallaufzeitmessung als Referenz verwendet wird.

7. Verfahren nach dem vorstehenden Anspruch 6, wobei jeder der Einzelvergleiche so durchgeführt wird, dass ein Gradient aus der gemittelte, gefilterte, geglätteten und/oder transponierten Messreihe bestimmt wird und mit der Referenz verglichen wird.

8. Verfahren nach einem der vorstehenden Ansprüche, wobei die Filterung mit einer FFT, anschließendem Herausnehmen höherer Frequenzanteile und einer IFFT durchgeführt wird.

9. Verfahren nach einem der vorstehenden Ansprüche, wobei mittels FFT eine transformierte Messreiche erzeugt wird und diese oder deren Werte mit der Referenz verglichen werden und/oder wobei mittels FFT eine transformierte Referenzmessreihe erzeugt wird und diese oder deren Werte mit der Messreihe oder davon abgeleiteten Werte verglichen werden.

10. Verfahren nach einem der vorstehenden Ansprüche, wobei die phasenbasierten Messungen und/oder Laufzeitmessungen zur Entfernungsmessung verwendet werden und/oder wobei die Signallaufzeiten und/oder Signallaufzeitänderungen mit der Veränderung von Phasenlagen und/oder Veränderung der Phasenlagenänderungen verglichen werden.

11. Verfahren nach einem der vorstehenden Ansprüche, wobei Laufzeitmessungen und/oder Phasenmessungen an Funksignalen und/oder Funksignale mit einer Leistung unterhalb einer vorbestimmten und/oder ermittelten Leistungsuntergrenze empfangene Funksignale unberücksichtigt bleiben und/oder wobei Laufzeitmessungen und/oder Phasenmessungen an Funksignalen und/oder Funksignale mit einer Leistung oberhalb einer vorbestimmten und/oder ermittelten Leistungsobergrenze empfangene Funksignale unberücksichtigt bleiben.

12. Verfahren nach einem der vorstehenden Ansprüche, wobei die Messungen mit geringer Empfangsleistungen nicht berücksichtigt werden

13. Verfahren nach einem der vorstehenden Ansprüche, wobei die Breite des Frequenzintervalls mindestens 0,1 MHz und/oder maximal 100 MHz beträgt und/oder wobei der Frequenzabstand zwischen zwei aufeinander folgenden der unterschiedlichen Frequenzen mindestens 0,1 MHz und/oder maximal 10 MHz beträgt und/oder die unterschiedlichen Frequenzen mindestens fünf Frequenzen und/oder maximal 200 Frequenzen darstellen und/oder wobei die Funksignale auf den unterschiedlichen Frequenzen nacheinander und/oder aufeinanderfolgend abgestrahlt werden und/oder wobei die Bandbreite der Funksignale zu keiner Zeit 50 MHz übersteigt.

14. Zugangssystem zur Gewährung und/oder Verweigerung eines Zugangs, aufweisend ein erstes Objekt und ein zweites Objekt und eine Steuerung, eingerichtet zur Durchführung eines Verfahrens nach einem der Ansprüche 1 bis 13 zur Erkennung eines Relayangriffs.

Europäisches
Patentamt

European
Patent Office

Office européen
des brevets

# EUROPÄISCHER RECHERCHENBERICHT

**Nummer der Anmeldung**

EP 24 20 4613

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2022/096514 A1 (LAMBDA 4 ENTW GMBH [DE]) 12. Mai 2022 (2022-05-12) * Seiten 2-21 * * Abbildungen 1,2 * - - - - - | 1-14 | INV. G01S13/82 G01S13/84 H04W12/122 |
| A | FR 3 101 157 A1 (VALEO COMFORT & DRIVING ASSISTANCE [FR]) 26. März 2021 (2021-03-26) * Absätze [0006] - [0111] * * Abbildungen 1-7 * - - - - - | 1-14 | ADD. G07C9/00 |

**RECHERCHIERTE SACHGEBIETE (IPC)**

G01S
G07C
H04W

Der vorliegende Recherchenbericht wurde für alle Patentansprüche erstellt

| Recherchenort | Abschlußdatum der Recherche | Prüfer |
|---|---|---|
| München | 27. Januar 2025 | Kruck, Peter |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 20 4613

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-01-2025

| Im Recherchenbericht angeführtes Patentdokument | Datum der Veröffentlichung | Mitglied(er) der Patentfamilie | Datum der Veröffentlichung |
|---|---|---|---|
| WO 2022096514 A1 | 12-05-2022 | EP 4078215 A1<br>US 2024080670 A1<br>WO 2022096514 A1 | 26-10-2022<br>07-03-2024<br>12-05-2022 |
| FR 3101157 A1 | 26-03-2021 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3564703 A1
- WO 2022096514 A1